# EUROPÄISCHE PATENTANMELDUNG

(11) **EP 1 875 977 A1**
(43) Veröffentlichungstag der Anmeldung: **09.01.2008**
(21) Anmeldenummer: 07012122.3
(22) Anmeldetag: 21.06.2007
(51) Int. Cl.: B22C 9/10, B22D 19/00, F02F 3/16, F16J 1/09

(54) **Ringträger-Kühlkanalverbund**

(30) Priorität: 05.07.2006 DE 102006031086
(71) Anmelder: KS Kolbenschmidt GmbH, 74172 Neckarsulm (DE)
(72) Erfinder: Ottliczky, Emmerich, 74670 Forchtenberg-Ernsbach (DE)
(74) Vertreter: Dietrich, Barbara

(57) **Zusammenfassung**

Die Erfindung betrifft ein Verfahren zur Herstellung eines Kolbens (1) aus Leichtmetall für Brennkraftmaschinen, unter Verwendung einer Gießform. Zur Ausgestaltung eines Kühlkanals (6) wird dem Ringträger (5a) ein wasserlöslicher Kern (7a) zugeordnet. Vor dem Gießprozess wird der Ringträger (5a) ohne separate Haltemittel über eine kraftschlüssige und / oder formschlüssige Verbindung an dem Kern (7a) befestigt ist, die gemeinsam ein als Ringträger-Kühlkanalverbund bezeichnetes Kombiteil (12a) bilden.

## Beschreibung

Die Erfindung betrifft ein Verfahren zur Herstellung eines Kolbens aus Leichtmetall für Brennkraftmaschinen, unter Verwendung einer Gießform, bei dem zur Bildung eines Kühlkanals vor dem Gießen ein wasserlöslicher, einem Ringträger benachbarter Kern, insbesondere ein Salzkern, platziert wird.

Zur Anordnung des den Kühlkanal bildenden Salzkerns und des Ringträgers in dem Kolben sind unterschiedliche Konzepte bekannt. Verbreitet sind mittels eines Salzkerns oder eines Faserkerns hergestellte Standardkühlkanäle mit einem rotationssymmetrischen Querschnittsprofil, oder sogenannte Formkühlkanäle mit einem asymmetrischen Querschnitt, wobei Kühlkanäle jeweils relativ weit beabstandet zu dem Ringträger innerhalb des Kolbes angeordnet sind.

Aus der DE 197 01 085 A1 ist ein gattungsgemäßes Herstellverfahren bekannt, bei dem der in der Gießform fixierte Salzkern gleichzeitig Haltemittel zur Aufnahme des Ringträgers einschließt. Beispielsweise sind dazu in den Kern eingebette metallische stiftförmige Haltemittel vorgesehen. Alternativ zu separaten den Ringträger mit dem Kern verbindenden Elementen, sind gemäß der DE 42 38 851 A1 der Ringträger und des Kern unabhängig voneinander durch Haltsstifte oder Haltepinolen in der Gießform abgestützt. Dazu sind sowohl für den Salzkern als auch für den Ringträger in der Gießform geeignete Halterungen oder Auflager erforderlich.

Übereinstimmend erfordern beide Lösungen relativ umfangreiche Werkzeugeinrichtungen und Gießwerkzeuge sowie eine Vielzahl von Montageschritten, die unmittelbar die Herstellkosten beeinflussen.

Der Erfindung liegt daher die Aufgabe zugrunde, eine einfache, kostengünstige Anordnung des Kerns in Verbindung mit dem Ringträger zu realisieren, zur Erzielung einer verbesserten Kühlwirkung des Kolbens.

Diese Aufgabe wird durch die Merkmale der unabhängigen Patentansprüche 1 und 4 gelöst.

Gemäß dem Verfahren nach Anspruch 1 wird die Aufgabe dadurch gelöst, dass bei dem Gießprozess der Ringträger unmittelbar über eine kraftschlüssige und / oder formschlüssige Verbindung an dem wasserlöslichen Salz- oder Faserkern befestigt ist. Die direkte Abstützung des Ringträgers an dem Kern bildet ein Kombiteil, das einen Ringträger-Kühlkanalverbund darstellt. Dieser Verbund optimiert einen Wärmeübergang von dem Ringträger auf den Kühlkanal, wobei die Wärme von dem durch den Kühlkanal strömendende Kühlmedium wirksam abgeleitet wird. Das erfindungsgemäße Konzept verbessert insbesondere die Kühlung der ersten in dem Ringträger eingebrachten Ringnut sowie der Verbrennungsmulde im Kolbenboden und damit die thermisch am stärksten betroffenen Zonen bzw. Pfade des Kolbens, was sich positiv auf die Dauerfestigkeit und folglich auf die Lebensdauer des Kolbens auswirkt. Vorteilhaft ist der Ringträger gemäß der Erfindung, ohne zusätzliche Maßnahmen, wie beispielsweise Halterungen oder Auflager, während des Gießprozesses sicher an dem Kühlkanal fixiert. Diese Anordnung verringert die Anzahl der Bauteile, die vor dem Gießprozess in der Gießform zu fixieren sind. Damit wird gleichzeitig der Aufwand für die Werkzeug- und Gießeinrichtung reduziert, verbunden mit einer vereinfachten Montage, wodurch sich insgesamt ein Kostenvorteil einstellt.

Gemäß der Erfindung sind zur Herstellung des Kolbens folgende Verfahrensschritte vorgesehen. Nach einer Alfinierung des Ringträgers wird dieser mit dem zuvor erwärmten Kern ohne separate Haltemittel verbunden. Anschließend wird das aus dem Ringträger und dem Kern bestehende Kombiteil in das Gießwerkzeug eingelegt.

Bevorzugt sieht die Erfindung als kraftschlüssige Verbindung eine Klemmung oder Pressung vor, um eine sichere Befestigung des Ringträgers an dem Kern zu erreichen. Alternativ bietet sich eine formschlüssige Verbindung an.

Die Erfindung nach Anspruch 4 bezieht sich auf eine Anordnung aus Ringträger und Kern eines Kolbens aus Leichtmetall gemäß den Merkmalen des Oberbegriffs, die vorsieht, dass für den Gießprozess der Ringträger unmittelbar ohne separate Haltemittel unverlierbar an dem Kern fixiert ist und die gemeinsam einen Ringträger-Kühlkanalverbund bilden.

Als Maßnahme die Einbindung des Ringträgers in den Gußkörper des Kolbens zu verbessern ist gemäß der Erfindung vorgesehen, den Ringträger zur Bildung einer Rissfalle mit zumindest einer Ausnehmung oder einer Nut zu versehen. Die Rissfalle vermeidet oder unterbricht wirksam ein Weiterlaufen einer Bindungsschädigung zu dem Kolbenboden bzw. zum Außendurchmesser des Kolbens.

Eine weitere Ausgestaltung sieht vor, in verschiedenen Abschnitten des Ringträgers Rissfallen vorzusehen. Bevorzugt ist dazu an einer in Richtung einer Symmetrieachse des Kolbens gerichteten Innenseite und / oder an einer Unterseite des Ringträgers zumindest eine Ausnehmung oder eine Nut vorgesehen. Bedarfsabhängig schließt die Erfindung auch mehrere Rissfallen in den einzelnen Ringträgerabschnitten ein.

Um die nachteilige Bindungsschädigung einerseits wirksam zu unterbinden, ohne anderseits eine Bauteilschwächung des Kolbens zu verursachen, ist für die Rissfalle vorzugsweise ein Breitmaß "x" ≤ 1,5 mm und ein Tiefenmaß "y" ≤ 0,5 mm vorgesehen.

Zur Erzielung einer sicheren formschlüssigen Befestigung zwischen dem Ringträger und dem Kern ist vorgesehen, den Ringträger innenseitig mit einem gestuften Abschnitt zu versehen, an dem der Kern abgestützt und / verrastet ist. Dabei ist der Kern mit einem nasenartig gestalteten, axial vorstehenden Ansatz versehen, der unmittelbar mit der Stufe des Ringträgers zusammenwirkt.

Zwecks Darstellung einer wirksamen kraftschlüssigen Abstützung des Ringträgers an dem Kern, sieht die Erfindung eine geneigt verlaufende Kontaktfläche vor. Bevorzugt ist der Ringträger über eine zu der Symmetrieachse des Kolbens unter einem Winkel "α" ≤ 10 ° geneigt verlaufende Fläche an dem Kern abgestützt, der eine korrespondierende ausgerichtete Fläche einschließt. Diese Anordnung bewirkt eine sichere kraftschlüssige Klemmung zwischen den Bauteilen, dem Kern und dem Ringträger.

Als Maßnahme um nachteilige, Rissbildungen auslösende Spannungsspitzen in dem Kolben zu vermeiden, weist der Kern, der bei dem fertiggestellten Kolben den Hohlraum des Kühlkanals definiert, ein gerundetes bzw. ein ovales Querschnittsprofil auf. Die Gestaltung des Kerns schließt dabei eine auch als Scheitel zu bezeichnende Oberseite ein, die von dem Ringträger ausgehend geneigt verläuft. Die Neigung der Oberseite kann dabei in einem Winkelbereich "β" ≤ 45° verlaufen. In einem Übergang zwischen der Oberseite und einer Außenwandung bildet der Kern einen Radius, dessen Maß vorzugsweise alle übrigen Radien des Kerns übertrifft.

Die Erfindung wird im Folgenden anhand von Ausführungsbeispielen unter Bezugnahme auf die Zeichnung näher erläutert. Es zeigen:
- Fig.1:: Ein erstes Ausführungsbeispiel eines im Halbschnitt abgebildeten Kolbens, bei dem der Ringträger mit dem Kern verbunden ist,
- Fig.2:: ein zweites Ausführungsbeispiel in einem vergrößerten Maßstab, das einen Verbund von Kern und Rringträger innerhalb des Kolbens darstellt,
- Fig.3:: ein drittes Ausführungsbeispiel, das ein aus Kern und Ringträger zusammengesetztes Kombiteil in einer Schnittdarstellung zeigt,
- Fig.4:: ein viertes Ausführungsbeispie, das ein aus Kern und Ringträger zusammengesetztes Kombiteil in einer Schnittdarstellung zeigt,
- Fig.5:: ein fünftes Ausführungsbeispiel, das ein aus Kern und Ringträger zusammengesetztes Kombiteils in einer Schnittdarstellung zeigt.

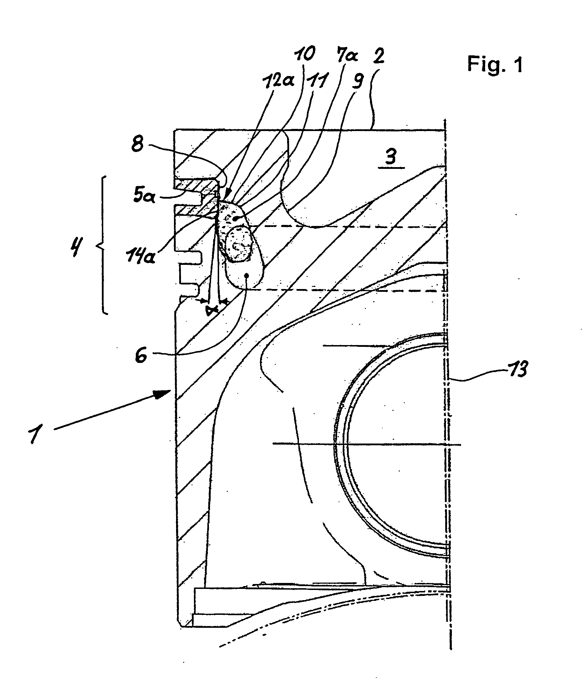

Die Figur 1 zeigt in einem Halbschnitt einen Kolben 1, der als Gusskolben aus Leichtmetall hergestellt ist. Im Bereich eines Kolbenbodens 2 bildet der Kolben 1 eine auch als Brennraummulde zu bezeichnende Mulde 3. Außenseitig schließt der Kolben 1 zur Aufnahme von in der Figur 1 nicht abgebildeten Kolbenringen ein Ringfeld 4 ein. Für den oberen Kolbenring ist in dem Kolben 1 ein Ringträger 5a als separates Bauteil eingegossen. Axial beabstandet zu dem Ringfeld 4 ist innerhalb des Kolbens 1 ein umlaufender Kühlkanal 6 mit einem ovalförmig gestalteten Querschnittsprofil integriert. In Richtung des Kolbenbodens 2 schließt sich an den Kühlkanal 6 ein Kern 7a an, der im Einbauzustand des Kolbens 1 eine Erweiterung bzw. Verlängerung des Kühlkanals 6 darstellt. Der mittels des Kerns 7a in Richtung des Kolbenbodens 2 verlängerte und an einer Innenseite 8 des Ringträgers 5a abgestützte Kühlkanal 6 bewirkt eine verbesserte Kühlung des Ringträgers 5a sowie einer thermisch hochbelasteten Randzone 9 der Mulde 3. Zur Vermeidung von Spannungsspitzen im Kolben 1 bildet der Kern 7a, bevorzugt als Salz- oder Faserkern ausgebildet, an einer Oberseite 10 einen gerundet gestalteten Scheitel 11. Ohne zusätzliche Maßnahmen sind der Ringträger 5a und der Kern 7a, zur Bildung eines als Kombiteil 12a bezeichneten Ringträger-Kühlkanalverbandes, verliergesichert zusammengefügt. Zur Erzielung eines Press- oder Klemmsitzes zwischen dem Ringträger 5a und dem Kern 7a sind diese Bauteile über eine in Richtung einer Symmetrieachse 13 des Kolbens 1 unter einem Winkel "α" ≤ 10 ° geneigt verlaufende Kontaktfläche 14a abgestützt.

Die nachfolgenden Figurenbeschreibungen beziehen sich auf alternative Ausführungsbeispiele des Ringträger-Kühlkanalverbands.

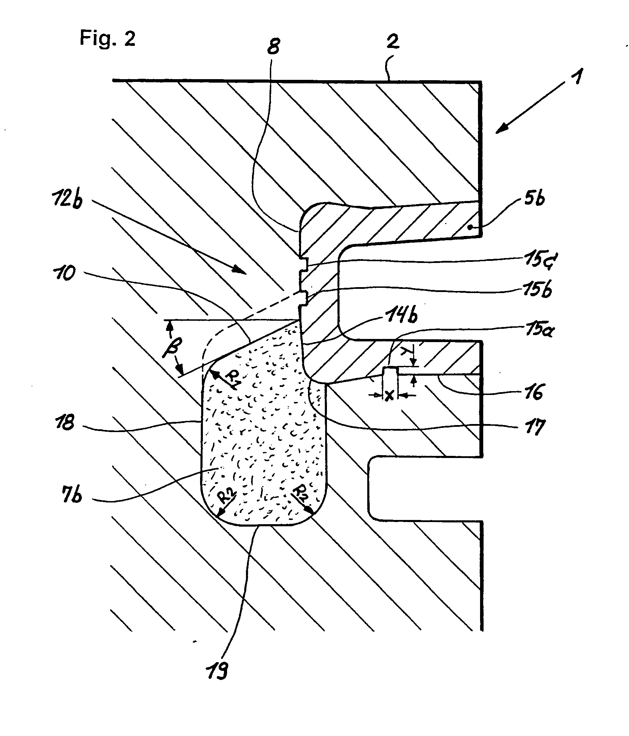

Die Figur 2 zeigt in einem vergrößerten Maßstab das den Kern 7b und den Ringträger 5 umfassende Kombiteil 12b innerhalb des Kolbens 1. Der Ringträger 5b schließt zur Bildung einer Rissfalle 15a, 15b, 15c an der Innenseite 8 sowie an einer Unterseite 16 jeweils zumindest eine Nut oder eine Ausnehmung ein. Die Aufgabe der Rissfallen 15a, 15b, 15c besteht darin, bei dem Gießvorgang ein Weiterlaufen einer Bindungsschädigung zu dem Kolbenboden 2 bzw. zu dem Außendurchmesser des Kolbens 1 zu vermeiden. Eine optimale Auslegung der Nut oder der Ausnehmung zur Darstellung der Rissfalle 15a, 15b, 15c sieht ein Breitenmaß "x" von ≤ 1,5 mm und ein Tiefenmaß "y" von ≤ 0,5 mm vor. Im Bereich der Kontaktfläche 14b ist der Ringträger 5b über eine gerundete Außenkontur an einer Aufnahme 17 des Kerns 7b abgestützt. Der den gesamten Kühlkanal bildende Kern 7b schließt in einem Übergang zwischen der Oberseite 10 und einer Innenwand 18 einen Radius "R₁" ein, der ≥ als die Radien "R₂" der Unterseite 19 ausgelegt ist. Die Oberseite 10 verläuft von der Innnenseite 8 des Ringträgers 5b ausgehend, unter einem Winkel "β" ≤ 45°geneigt entgegen dem Kolbenboden 2. Strichpunktiert ist ein weiterer Verlauf der Oberseite dargestellt, der an der Innenseite 8 des Ringträgers 5b die Rissfalle 15b überdeckt.

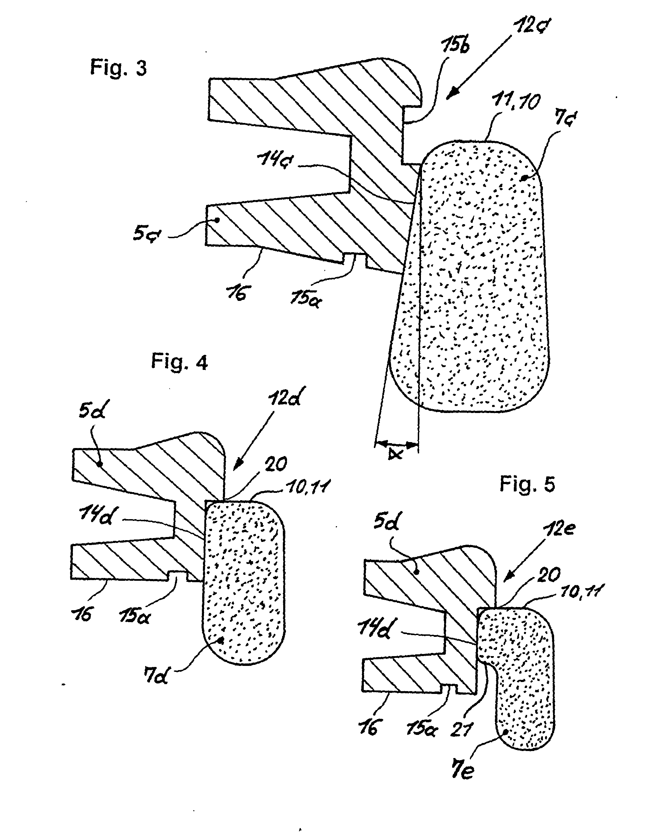

In der Figur 3 ist das Kombiteil 12c als Einzelteil abgebildet. Die Kontaktfläche 14c zwischen dem Kern 7c und dem Ringträger 5c verläuft vergleichbar der in Fig. 1 gezeigten Kontaktfläche 12a in Richtung der nicht dargestellten Symmetrieachse 13 des Kolbens 1 geneigt unter einem Winkel "α" ≤ 10 °. Die Abstützung des Kerns 7c an dem Ringträger 5c erfolgt dabei so, dass sich nahezu eine Lageübereinstimmung zwischen dem Scheitel 11 bzw. der Oberseite 10 des Kerns 7c und der Rissfalle 15b einstellt. Optional ist der ringträger 5c an der Unterseite 16 mit einer weiteren Rissfalle 15a versehen.

Das Ausführungsbeispiel gemäß Figur 4 zeigt das Kombiteil 12d. Dabei stützt sich der Ringträger 5d über einen gestuften Abschnitt, eine Stufe 20 formschlüssig an der Oberseite 10 des Kerns 7d ab. Diese Auslegung schließt eine konzentrisch zu der Symmetrieachse 13 des Kolbens 1 verlaufende Kontaktfläche 14d ein.

Gemäß dem in Figur 5 gezeigten Kombiteil 12e umfasst der Kern 7e einen axial vorstehenden Ansatz 21, an dem der Ringträger 7d über die Stufe 20 abgestützt ist.

### Bezugszeichenliste

- 1: Kolben
- 2: Kolbenboden
- 3: Mulde
- 4: Ringfeld
- 5a: Ringträger
- 5b: Ringträger
- 5c: Ringträger
- 5d: Ringträger
- 6: Kühlkanal
- 7a: Kern
- 7b: Kern
- 7c: Kern
- 7d: Kern
- 7e: Kern
- 8: Innenseite
- 9: Randzone
- 10: Oberseite
- 11: Scheitel
- 12a: Kombiteil
- 12b: Kombiteil
- 12c: Kombiteil
- 12d: Kombiteil
- 12e: Kombiteil
- 13: Symmetrieachse
- 14a: Kontaktfläche
- 14b: Kontaktfläche
- 14c: Kontaktfläche
- 14d: Kontaktfläche
- 15a: Rissfalle
- 15b: Rissfalle
- 15c: Rissfalle
- 16: Unterseite
- 17: Aufnahme
- 18: Innenwand
- 19: Unterseite
- 20: Stufe
- 21: Ansatz

## Patentansprüche

1. Verfahren zur Herstellung eines Kolbens (1) aus Leichtmetall für Brennkraftmaschinen, unter Verwendung einer Gießform, bei dem zur Bildung eines Kühlkanals (6) vor dem Gießen ein wasserlöslicher, einem Ringträger (5a bis 5d) benachbarter Kern (7a bis 7e), insbesondere ein Salzkern, platziert wird, **dadurch gekennzeichnet, dass** bei dem Gießprozess zur Bildung eines Kombiteils (12a bis 12e) der Ringträger (5a bis 5d) an dem Kern (7a bis 7e) über eine kraftschlüssige und / oder formschlüssige Verbindung unmittelbar befestigt ist, die gemeinsam einen Ringträger-Kühlkanalverbund bilden.

2. Verfahren nach Anspruch 1, **dadurch gekennzeichnet, dass** die Herstellung des Kolbens (1) nachfolgende Schritte einschließt,
- Alfinierung des Ringträgers (5a bis 5d),
- Aufstecken des Ringträgers (5a bis 5d) auf den erwärmten Kern (7a bis 7e),
- Einlegen des aus dem Ringträger (5a bis 5d) und dem Kern (7a bis 7e) bestehenden Kombiteils (12a bis 12e) in das Gießwerkzeug.

3. Verfahren nach Anspruch 1, **dadurch gekennzeichnet, dass** mittels einer Klemmung oder Pressung der Ringträger (5a, 5c) und der Kern (7a, 7c) zusammengefügt sind.

4. Anordnung aus Ringträger (5a bis 5d) und Kern (7a bis 7e) eines Kolbens (1) aus Leichtmetall für Brennkraftmaschinen, unter Verwendung einer Gießform, wobei Bildung eines eingegossenen, dem Ringträger (5a bis 5d) benachbarten Kühlkanals (6) der wasserlösliche Kern (7a bis 7e) vor dem Gießen platziert wird, **dadurch gekennzeichnet, dass** für den Gießprozess der Ringträger (5a bis 5d) unmittelbar ohne separate Haltemittel unverlierbar an dem Kern (7a bis 7e) fixiert ist, die gemeinsam ein Kombiteil (12a bis 12e) bilden.

5. Anordnung nach Anspruch 4, **dadurch gekennzeichnet, dass** der Ringträger (5a bis 5d) zur Bildung einer Rissfalle (15a, 15b,15c) an zumindest einer Außenkontur eine Ausnehmung oder Nut einschließt.

6. Anordnung nach Anspruch 5, **dadurch gekennzeichnet, dass** der Ringträger (5a bis 5d) als Rissfalle (15a, 15b,15c) an einer in Richtung einer Symmetrieachse (13) des Kolbens (1) gerichteten Innenseite (8) und / oder an einer Unterseite (16) zumindest eine Ausnehmung oder Nut aufweist.

7. Anordnung nach Anspruch 5, **dadurch gekennzeichnet, dass** zur Ausbildung Rissfalle (15a, 15b,15c) für die Ausnehmung oder die Nut ein Breitenmaß "x" von ≤ 1,5 mm und ein Tiefenmaß "y" von ≤ 0,5 mm vorgesehen ist.

8. Anordnung nach Anspruch 4, **dadurch gekennzeichnet, dass** der Ringträger (5d) mit einer Stufe (20) der Innenseite (8) an dem Kern (7d, 7e) verrastet.

9. Anordnung nach Anspruch 8, **dadurch gekennzeichnet, dass** der Kern (7e) mit einem nasenartig gestalteten, axial vorstehenden Ansatz (21) mit der Stufe (20) des Ringträgers (5d) zusammenwirkt.

10. Anordnung nach Anspruch 4, **dadurch gekennzeichnet, dass** der Ringträger (5a, 5c) über eine in einem Winkel "α" ≤ 10 ° zu der Symmetrieachse (13) des Kolbens (1) geneigt verlaufende Kontaktfläche (14a, 14c) an dem Kern (7a, 7c) abgestützt ist.

11. Anordnung nach Anspruch 4, **dadurch gekennzeichnet, dass** eine Oberseite (10) des Kerns (7b) von dem Ringträger (5b) ausgehend, unter einem Winkel "β" ≤ 45° geneigt verläuft.
